# EUROPEAN PATENT APPLICATION

(11) **EP 4 656 517 A1**
(43) Date of publication of application: **03.12.2025**
(21) Application number: 24178307.5
(22) Date of filing: 27.05.2024
(51) Int. Cl.: B64D 11/04

(54) **STORAGE TANK TROLLEY FOR AN AIRCRAFT CABIN**

(71) Applicant: AIRBUS Operations GmbH, 21129 Hamburg (DE)
(72) Inventor: Rollfink, Patrick, Hamburg (DE); Kiehne, Oliver, Hamburg (DE); Timke, Patrick, Hamburg (DE); Delaplanche, Olivier, Hamburg (DE)

(57) **Abstract**

The present invention relates to a storage tank trolley (2) for an aircraft cabin, comprising a tank (8) configured to store a fluid; a temperature regulating device (6); a power interface (4); and a fluid transfer interface (10); wherein the temperature regulating device (6) is connected to the power interface (4) for providing electric power from a source to the temperature regulating device (6) for generating thermal energy by the temperature regulating device (6); the temperature regulating device (6) is configured to supply the generated thermal energy to the tank (8) for temperature treatment to maintain or actively change a temperature of a fluid inside the tank (8); wherein the fluid transfer interface (10) is connected to the tank (8) and configured to be couplable with a fluid transfer interface of a dispensing trolley. The invention further relates to a docking system, an aircraft galley arrangement, an aircraft and a method for operating a storage tank trolley.

## Description

### FIELD OF THE INVENTION

This invention relates to storage trolleys for aircraft cabins, specifically to trolleys equipped with temperature regulation systems and fluid transfer capabilities. The invention is further directed to a docking system for a storage tank trolley, an aircraft galley arrangement, an aircraft and a method for operating a storage tank trolley.

### BACKGROUND OF THE INVENTION

In modern aircraft, the provision of beverages and other fluids to passengers requires efficient storage and temperature management solutions. Traditional storage devices include trolleys equipped with food and liquids and/or fluid tanks. The temperature management of aircraft trolleys is accomplished, for example, by passive temperature management such as insulation, the use of thermal packs or barriers like dry ice, phase change materials or gel packs which may be pre-cooled or pre-heated and for example placed inside the trolley to help maintain or achieve a desired temperature. Also active temperature regulation systems are used, for example refrigeration units or heating elements which may be integrated into the trolleys. Some trolleys are equipped with rechargeable batteries that can power the temperature regulation systems independently of the aircraft's power supply.

The use of ice packs for example is simple, but also cumbersome and does not allow the temperature to be set or kept precisely over a longer period of time. Batteries, on the other hand, are not particularly desirable in aircraft cabins due to the risk of fire, and charging batteries is often not easy to accomplish either.

Thus, there exists a problem in providing an efficient, energy-saving and easy way to keep a temperature of a fluid in an aircraft trolley at a desired temperature for extensive periods of time. In other words, there is a need to enable a fluid in a storage tank trolley to be kept at a defined temperature for an extensive time duration.

### SUMMARY OF THE INVENTION

It may be seen as an object of the invention to provide an improved storage tank trolley for an aircraft. The object of the present invention is solved by the subject-matter of the independent claims; further embodiments are incorporated in the dependent claims.

Provided is a storage tank trolley for an aircraft cabin, a docking system for a storage tank trolley, an aircraft galley arrangement, an aircraft, and a method for operating a storage tank trolley.

According to the invention, a storage tank trolley for an aircraft cabin is provided. The storage tank trolley comprises a tank which is configured to store a fluid. The storage tank trolley further comprises a power interface. In addition, the storage tank trolley comprises a temperature regulating device which is connected to the power interface for providing electric power from a source to the temperature regulating device for generating thermal energy by the temperature regulating device. The temperature regulating device is configured to supply the generated thermal energy to the tank for temperature treatment to maintain or actively change a temperature of a fluid inside the tank. And the storage tank trolley comprises a fluid transfer interface which is connected to the tank and is configured to be couplable with a fluid transfer interface of a dispensing trolley to provide a flow of the temperature-treated fluid from the storage tank trolley to the dispensing trolley.

The term "storage tank trolley" relates to a trolley as currently used in aircraft cabins configured to store, for example, service equipment, food, liquids or fluid tanks. A storage tank trolley in an aircraft cabin may also be seen as a specialized mobile cart designed to securely hold and transport e.g. storage tanks containing a fluid within the confined and regulated environment of an aircraft cabin. These trolleys are usually tailored to meet stringent aviation safety standards and may generally be used for a variety of purposes including in-flight catering, maintenance purposes or any other purposes for which a fluid or liquid is required and must be taken along. A storage tank trolley can also be referred to as stock tank trolley, supply tank trolley, holding tank trolley or simply as a tank trolley. For example, the storage tank trolley is a water tank trolley.

The term "fluid" generally relates to any substance that can flow. As such, fluids can comprise liquids, gases, and plasmas.

The tank of the storage tank trolley is configured to store a fluid. Thus, the term "tank" here relates to any container or vessel specifically designed to store and hold a fluid, such as a liquid or a gas. A fluid tank may have various shapes, sizes, and materials, tailored to the properties of the fluid it is meant to contain. A fluid tank can be made from a variety of materials, including metals (such as steel or aluminum), plastics (such as polyethylene or polypropylene), fiberglass or any other suitable material. The choice of material depends on the fluid's chemical properties, such as corrosiveness, temperature, and pressure requirements. However, lighter, less heavy materials are particularly advantageous for an aircraft cabin. In an alternative example, the storage tank trolley can comprise at least one, i.e. one, two or more tank(s) which may vary in size, material and content. The tank can also be referred to as tank arrangement.

The power interface is connected to the temperature regulating device for providing power transfer from a source to the temperature regulating device of the storage tank trolley. The term "power interface" generally refers to a component or subsystem in an electrical or electronic system that facilitates the management, conversion, and distribution of electrical power between parts of the system. Here, it relates to an interface for providing power to the storage tank trolley, and in particular, for providing power to the temperature regulating device of the storage tank trolley. The power interface can also be referred to as power supply interface, power receiving interface, power receiving device, receiver, receiving unit, interface connector, second interface connector or mobile interface. It may also be referred to as power port, power connection, power input/output (I/O), power terminal or energy interface. In an example, power is transmitted via the power interface from an external power source, wherein the external power source may be the aircraft. In a further example, the storage tank trolley may comprise at least one, i.e. one, two or more power interface(s). The power interface(s) of the storage tank trolley can be arranged or mounted at any side, including the bottom or the top of the trolley housing.

The "temperature regulating device" is connected to the power interface and to the tank and relates to an element for providing temperature control, temperature maintenance or adjustment. It is connected to the power interface for providing electric power from a source to the temperature regulating device. The temperature regulating device can then generate thermal energy and is configured to supply the generated thermal energy to the tank. Hence, the temperature of a fluid inside the tank can be maintained or actively changed. The temperature regulating device can also be referred to as a temperature control element, a heating and/or cooling apparatus or a heating and/or cooling device. In an example, the temperature regulating device is configured to compensate heat loss or heat ingress of the fluid inside the tank. In a further example, the temperature regulating device is designed to adjust the temperature of a fluid inside the tank. In an example, the storage tank trolley may comprise more than one temperature regulating device.

The fluid transfer interface of the storage tank trolley is configured to provide fluid transfer to a dispensing trolley to provide a fluid flow between the storage tank trolley and the dispensing trolley. The storage tank trolley may dock, or connect, to a dispensing trolley, i.e. the dispensing trolley may comprise a corresponding (matching) fluid transfer interface. The interface(s) may include an automated docking mechanism establishing fluid transfer connection when a dispensing trolley and the storage tank trolley are positioned facing each other. The term "fluid transfer interface" thus relates to a system or component designed to facilitate the controlled transfer of fluids (such as liquids or gases) between different containers, systems, or devices. This interface can ensure that the fluid is moved efficiently, safely, and without contamination. In an example, a hose connection may be established, for example, by the cabin crew for fluid transfer. The storage tank trolley may also comprise more than one fluid transfer interface.

According to an example, the storage tank trolley is free of electric storage means.

The term "electric storage means" relates to any kind of electric storage systems that may be used for storing energy for later use. These systems capture electrical energy when it is generated, store it, and then release it when needed. There are several types of electric storage means, such as capacitors or batteries. "Free of electric storage means" means that the use of, for example, any battery equipment is avoided. The term "battery" may relate to any type of commonly used batteries, such as lithium-ion batteries, lead-acid batteries, nickel-cadmium batteries, nickel-metal hydride batteries and the like. A storage tank trolley which is free of any electric storage means has the advantage that it can be lighter, that weight is saved, that the step of charging a battery before operating the trolley is eliminated and that the fire risk posed by batteries, for example, is reduced.

According to an example, the tank of the storage tank trolley is a water tank.

The water tank is a container designed for storing water or any water based fluid and may be configured to store water (or water based fluid) of any temperature. A water tank can be made from various materials such as plastic (for example polyethylene or polypropylene), metal (for example steel or stainless steel), fibreglass or any other suitable material; however, lighter, less heavy materials are particularly advantageous for an aircraft cabin. The water tank may also be referred to as water storage tank, water storage unit, water container, water reservoir, holding tank, storage vessel, water bin or cistern.

According to an example, the storage tank trolley is insulated with an at least partly enclosing insulation layer.

An "insulation layer" refers to a material or a combination of materials used to reduce the transfer of e.g. heat, sound, or electricity between two areas. In one example of the invention, the at least partial insulation layer is used for thermal insulation. Insulating a tank can help maintain the temperature of the fluid inside, reducing energy consumption and preventing heat loss or freezing. Common known insulation methods for insulating a fluid tank, such as a water tank, may be: foam insulation, blanket insulation, internal insulation or an insulation by use of insulated tank jackets.

According to an example, the storage tank trolley comprises a replaceable tank.

A replaceable tank relates to a container designed to hold and store fluids that can be easily removed and replaced, for example when empty or when a different fluid is needed.

According to an example, the power interface of the storage tank trolley is configured for a wireless electrical power transmission.

Wireless power transfer (WPT) is a known technology that enables the transmission of electrical power from a power source to an electrical load without the need for physical connections such as wires or cables. Instead, power is transmitted using electromagnetic fields, allowing for more flexible and convenient charging or powering of devices over short to moderate distances. Several coupling mechanisms may be used, such as for example inductive coupling, resonant inductive coupling, or radio frequency (RF) transmission or any other suitable coupling mechanism.

According to an example, the power interface of the storage tank trolley is configured for a power transfer via physical contact.

Power transfer via physical contact may involve the direct transfer of electrical power between two components (for example between an external power source and the trolley) through physical connections such as wires, cables, or conductive surfaces. Unlike wireless power transfer, which relies on electromagnetic fields, power transfer via physical contact ensures a continuous electrical connection between the power source and the consumer.

According to an example, the temperature regulating device of the storage tank trolley is arranged above the tank.

The temperature regulating device can be located above the tank(s), i.e. in a vertical direction furthest away from the floor, for example at the very top near the trolley roof.

According to an example, the tank(s) of the storage tank trolley is/are arranged above the temperature regulating device, i.e. the temperature regulating device may be below the tank(s) in a vertical direction nearest to the floor, for example at the bottom of the trolley.

According to an aspect of the invention, a docking system for a storage tank trolley is provided, comprising: at least one storage tank trolley as described above, and at least one trolley docking station. The at least one trolley docking station is configured to temporarily receive the at least one storage tank trolley and comprises at least one power transmitting device configured to provide electric power from a source to the at least one storage tank trolley. The at least one storage tank trolley is configured to dock to the at least one trolley docking station for a temporary power supply. When the power transmitting device of the trolley docking station faces the power interface (the power receiving device) of the storage tank trolley, then power can be transmitted from a source to the storage tank trolley. The docking system may also be referred to as trolley docking system or disposition system.

The term "trolley docking station" relates to a mechanism designed to hold and position trolleys to an area, for example within an aircraft galley during flight and/or within a caterer facility during ground operations or an overnight stop, where power can be transmitted. The at least one trolley docking station may be arranged at a wall or a floor in the aircraft, for example at a galley wall or a galley floor. Thus, te electrical connection can be made via an arrangement on the floor, for example a floor in the aircraft. In an example, the trolley docking station may optionally have a bumper and/ or a locking mechanism for the at least one storage tank trolley.

The trolley docking station comprises at least one power transmitting device, also referred to as power delivering device, power transmitting interface, transmitting unit, transmitter, first interface connector or fixed interface. The power transmitting device is configured to provide electric power from a source to the at least one storage tank trolley. The source can be an external source and is configured to provide electrical power and can, for example, be the aircraft. The at least one storage tank trolley is configured to dock to the at least one trolley docking station for a temporary power supply such that the fluid in the fluid tank can be kept at a desired temperature.

In an option, the storage tank trolley may be seen as a temperature-regulating or temperature adjustable storage tank trolley. In other words, the storage tank trolley may be a dual state trolley, i.e. the trolley may be configured to be in two states: a first maintenance state without active temperature regulation (i.e. when the trolley is not at a trolley docking station and no power and consequently, no thermal energy is generated and transferred) and a second state where the trolley is in a docketed position and active temperature regulation or temperature control of the tank content can take place.

According to an example, the power transmitting device of the docking system is configured for a wireless electric power transmission, as explained above.

According to a further example, the power transmitting device of the docking system is configured for a power transfer via physical contact, as explained above.

According to a further aspect of the invention, an aircraft galley arrangement is provided comprising an aircraft monument comprising a galley having at least one trolley bay; and at least one storage tank trolley as described above. The at least one trolley bay comprises at least one docking system as described above, and the at least one storage tank trolley is configured to be installed in the at least one trolley bay.

According to another aspect of the invention, an aircraft is provided comprising an aircraft cabin having an aircraft galley arrangement as described above and/or at least one docking system as described above and/or a at least one storage tank trolley as described above.

According to a further aspect of the invention a method is provided for operating a storage tank trolley, the method comprising the following steps: docking a storage tank trolley as explained above to a trolley docking station, wherein the trolley docking station is configured to temporarily receive the storage tank trolley and comprises a power transmitting device configured to provide electric power from a source to the storage tank trolley; connecting the power interface of the storage tank trolley, which may be referred to as a power receiving device, with the power transmitting interface of the trolley docking station; starting a power supply (e.g. automatically or on demand) from a source via the power transmitting interface of the trolley docking station and the power receiving interface of the storage tank trolley to the temperature regulating device of the storage tank trolley; terminating the power supply (e.g. automatically or on demand); and undocking the storage tank trolley from the trolley docking station.

With the storage tank trolley and the docking system of the present invention, it is possible to keep a pre-tempered fluid (such as water), which has been pre-cooled or pre-heated to a certain temperature by a caterer and filled into a tank, at this temperature for a very long period of time, for example during a long-distance flight and even over the period of an overnight stop when the trolley is outside the aircraft, without the need for auxiliary materials such as dry ice, heating elements or heavy battery equipment. The storage tank trolley can (e.g. inductively) be supplied with energy at the trolley docking station on ground or in the aircraft, so that the temperature regulating device integrated in the trolley receives enough energy to counteract a temperature increase (e.g. in the case of pre-cooled water) or decrease (e.g. in the case of pre-heated water). The temperature regulating device therefore only has to regulate a small temperature-delta instead of heating or cooling the tank content from ambient temperature to the desired temperature. Batteries, which are heavy and pose a certain risk (for example the risk of fire) can be avoided. It may be seen as a key aspect of the present invention enabling a fluid in a storage tank trolley for an aircraft cabin to be kept at a defined temperature for an extensive duration.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a storage tank trolley for an aircraft cabin.
Fig. 2 schematically shows a docking system for a storage tank trolley.
Fig. 3 shows an aircraft comprising a galley arrangement.
Fig. 4 shows a flow diagram of a method for operating a storage tank trolley.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

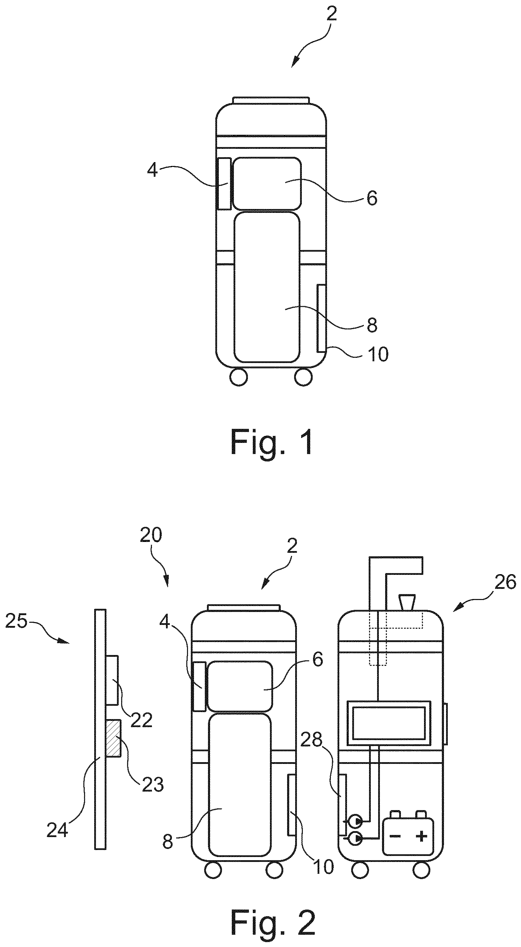

Fig. 1 shows a cross-sectional view of a movable storage tank trolley 2 for an aircraft cabin. The storage tank trolley 2 stores pre-tempered water and has a power interface 4 - shown here on the trolley wall on the left hand side - which is connected to a temperature regulating device 6 inside the trolley. The temperature regulating device 6 inside the trolley is arranged above the water tank 8 (i.e. in a vertical direction furthest away from the floor), and the water tank 8 is insulated with an at least partly enclosing insulation layer (not shown). The temperature regulating device 6 is also connected to the insulated tank 8 and can therefore regulate the temperature of the water inside the tank 8 when it receives power from an outside source (not shown) via the power interface 4. A fluid transfer interface 10 can be seen on the right hand side at a wall of the trolley 2. The interface 10 includes an automated docking mechanism establishing a fluid transfer connection when a dispensing trolley 26 (shown in Fig. 2) and the water tank trolley 2 are positioned facing each other. The storage tank trolley 2 does not have any electric storage means such as, for example, battery equipment.

Fig. 2 shows a docking system 20 for the storage tank trolley 2 shown in figure 1. The docking system 20 comprises a wall 24 on which the trolley docking station 25 is arranged, and a suitably equipped storage tank trolley 2. The trolley docking station 25 comprises a power transmitting device 22 arranged at the trolley docking station 25, which is configured to transmit a power supply wirelessly (i.e. by wireless energy transfer). The trolley docking station 25 can receive the trolley 2 and further comprises a bumper 23 that the trolley 2 can softly bump against when it is driven up to the wall 24 for charging. For the wireless power transmission, the trolley 2 docks directly onto the power transmitting device 22 of the trolley docking station 25 with the side on which its power interface 4 is arranged, so that the power interface 4 of the trolley and the power transmitting device 22 touch each other and power is transmitted. In an example, power may also be transmitted when the power interface 4 of the trolley and the power transmitting device 22 get close to each other.

In an example, the trolley docking station 25 comprising the power transmitting device 24 can also be arranged at the floor, for example at the galley floor. A suitably equipped trolley 2 will then have its power interface 4 located at a bottom side.

If power is transmitted from an external source, which can be the aircraft, or from a source on the ground in a catering facility, for example, then the temperature regulating device 6 inside the trolley 2 is supplied with power and can start functioning, i.e. the temperature regulating device 6 cools or heats the tank 8 and its content, respectively. The temperature regulating device 6 thus compensates for a temperature loss or a temperature increase (ingress) in order to keep the temperature of the tank content constant. In other words, the temperature regulating device 6 which can be a cooling and/or heating apparatus ensures any heat loss or heat ingress in the tank being compensated. The trolley can remain at the trolley docking station 25 for the duration of the flight. As an option, the trolley can also be removed from the trolley docking station 25 during flight and moved into the aisle to serve a dispensing trolley 26.

The dispensing trolley 26 which is shown in Fig. 2 does not form part of the docking system 20. The dispensing trolley 26 is used to move along the aisle to serve passengers and contains a smaller water tank (not shown) which requires repeated replenishing when empty during the cabin service. A transfer of water from the storage tank trolley 2 to the dispensing trolley 26 can also be realized when both trolleys 2, 26 are stored in the galley of the aircraft. The fluid transfer interfaces 10, 28 of the storage tank trolley and the dispensing trolley, respectively, can include an automated docking mechanism establishing a fluid transfer connection when the dispensing trolley 26 and the storage tank trolley 2 are positioned facing each other.

In an option of the example of Fig. 2 a fluid transfer connection can be established by providing a hose as part of one of the storage tank trolley 2 or the dispenser trolley 26, respectively, and connecting it to the other trolley, for example manually by the cabin crew.

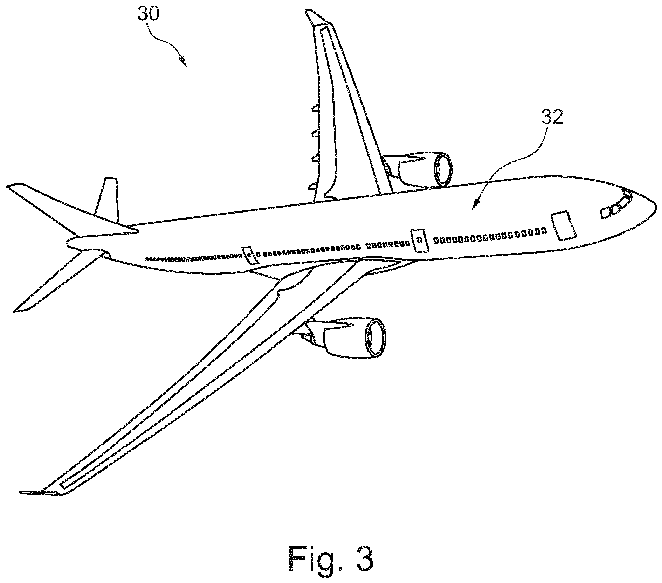

In Fig. 3 an aircraft 30 is shown comprising a galley arrangement 32 with a storage tank trolley 2.

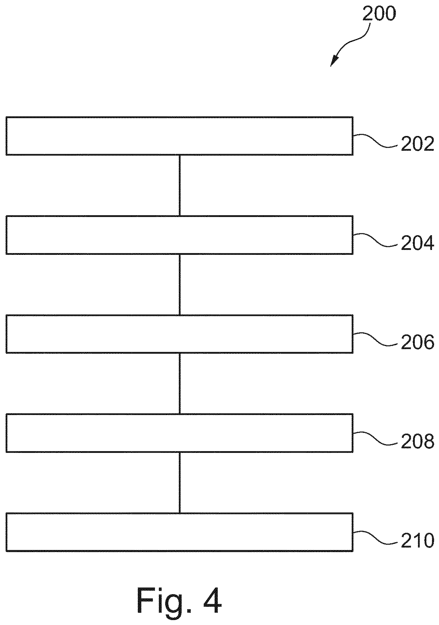

Fig. 4 shows a flow diagram of a method 200 for operating a storage tank trolley as explained above with respect to Fig. 1. In a first step 202 the storage tank trolley docks to a trolley docking station, wherein the trolley docking station is configured to temporarily receive the storage tank trolley and comprises a power transmitting device configured to provide electric power from a source to the storage tank trolley. In a second step 204 the power interface of the storage tank trolley connects with the power transmitting interface of the trolley docking station. In the next step 206 the power supply is started from a source via the power transmitting interface of the trolley docking station and the power interface of the storage tank trolley to the temperature regulating device of the storage tank trolley. For example, the power supply may be started automatically when the power interface of the storage tank trolley connects with the power transmitting interface of the trolley docking station. As another example, the power supply may also be started on demand, for example, only when a temperature loss or temperature ingress is actually measured or indicated by a suitable device. In the next step 208 the power supply is terminated. As mentioned in step 206, the power supply also may equivalently be terminated automatically or on demand. Finally, in step 210, the storage tank trolley is undocked from the trolley docking station. This method of operating a storage tank trolley makes it easy and uncomplicated to maintain a temperature of the contents of a tank in the storage tank trolley over a long and extensive period of time.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. Any reference signs in the claims should not be construed as limiting the scope.

### REFERENCE SIGNS

- 2: storage tank trolley
- 4: power interface
- 6: temperature regulating device
- 8: tank
- 10: fluid transfer interface (of storage trolley)
- 20: docking system
- 22: power transmitting device
- 23: bumper
- 24: wall
- 25: trolley docking station
- 26: dispensing trolley
- 28: fluid transfer interface (of dispensing trolley)
- 30: aircraft
- 32: aircraft galley arrangement

## Claims

1. A storage tank trolley (2) for an aircraft cabin, comprising
- a tank (8);
- a temperature regulating device (6);
- a power interface (4); and
- a fluid transfer interface (10);
wherein the tank (8) is configured to store a fluid;
wherein the temperature regulating device (6) is connected to the power interface (4) for providing electric power from a source to the temperature regulating device (6) for generating thermal energy by the temperature regulating device (6);
wherein the temperature regulating device (6) is configured to supply the generated thermal energy to the tank (8) for temperature treatment to maintain or actively change a temperature of a fluid inside the tank (8);
wherein the fluid transfer interface (10) is connected to the tank (8) and is configured to be couplable with a fluid transfer interface (28) of a dispensing trolley (26) to provide a flow of the temperature-treated fluid from the storage tank trolley (2) to the dispensing trolley (26).

2. The storage tank trolley (2) according to claim 1, wherein the storage tank trolley (2) is free of electric storage means.

3. The storage tank trolley (2) according to claim 1, wherein the tank (8) is a water tank.

4. The storage tank trolley (2) according to claim 1 or 2, wherein the tank (8) is insulated with an at least partly enclosing insulation layer.

5. The storage tank trolley (2) according to any one of the preceding claims, wherein the tank (8) is replaceable.

6. The storage tank trolley (2) according to any one of the preceding claims, wherein the power interface (4) is configured for a wireless electrical power transmission.

7. The storage tank trolley (2) according to any one of the preceding claims, wherein the power interface (4) is configured for a power transfer via physical contact.

8. The storage tank trolley (2) according to any one of the preceding claims, wherein the temperature regulating device (6) is arranged above the tank (8).

9. The storage tank trolley (2) according to any one of the preceding claims, wherein the tank (8) is arranged above the temperature regulating device (6).

10. A docking system (20) for a storage tank trolley (2), comprising:
- at least one storage tank trolley (2) according to any one of claims 1 to 9; and
- at least one trolley docking station (25);
wherein the at least one trolley docking station (25) is configured to temporarily receive the at least one storage tank trolley (2), and wherein the at least one trolley docking station (25) comprises at least one power transmitting device (22) configured to provide electric power from a source to the at least one storage tank trolley (2); and
wherein the at least one storage tank trolley (2) is configured to dock to the at least one trolley docking station (25) for a temporary power supply.

11. The docking system (20) according to claim 10, wherein the at least one power transmitting device (22) is configured for a wireless electric power transmission.

12. The docking system (20) according to claim 10, wherein the at least one power transmitting device (22) is configured for a power transfer via physical contact.

13. An aircraft galley arrangement (32) comprising
- an aircraft monument comprising a galley having at least one trolley bay; and
- at least one storage tank trolley (2) according to any one of claims 1 to 9;
wherein the at least one trolley bay comprises at least one docking system (20) according to any one of claims 10 to 12; and
wherein the at least one storage tank trolley (2) is configured to be installed in the at least one trolley bay.

14. An aircraft (30) comprising an aircraft cabin having an aircraft galley arrangement (32) according to claim 13 and/or at least one docking system (20) according to any one of claims 10 to 12 and/or at least one storage tank trolley (2) according to any one of claims 1 to 9.

15. A method (200) for operating a storage tank trolley, comprising the following steps:
- docking (202) a storage tank trolley according to any one of claims 1 to 9 to a trolley docking station, wherein the trolley docking station is configured to temporarily receive the storage tank trolley and comprises a power transmitting device configured to provide electric power from a source to the storage tank trolley;
- connecting (204) the power receiving interface of the storage tank trolley with the power transmitting interface of the trolley docking station;
- starting (206) a power supply from a source via the power transmitting interface of the trolley docking station and the power receiving interface of the storage tank trolley to the temperature regulating device of the storage tank trolley;
- terminating (208) the power supply; and
- undocking (210) the storage tank trolley from the trolley docking station.
